# EUROPÄISCHE PATENTANMELDUNG

(11) **EP 0 682 150 A1**
(43) Veröffentlichungstag der Anmeldung: **15.11.1995**
(21) Anmeldenummer: 95105057.4
(22) Anmeldetag: 04.04.1995
(51) Int. Cl.: E01F 8/00, E04C 1/39

(54) **Vorrichtung zum Begrünen einer Wand**

(30) Priorität: 14.04.1994 DE 9406241 U
(71) Anmelder: Technopol AG, CH-8280 Kreuzlingen (CH)
(72) Erfinder:
(74) Vertreter: Freiherr von Welser, Hubert

(57) **Zusammenfassung**

Vorrichtung zum Begrünen einer Wand (2) mit einer auf deren Innenseite in einem Trog (6) wurzelnden, durch die Wand (2) in einem Rohr (7) geführten Pflanze (1). In dem Rohr (7) ist ein Innenrohr (8) aus elastisch verformbarem Material angeordnet, das den Trieb der Pflanze (1) abdichtend umgibt. Das Rohr (7) kann in einem in die Wand (2) einsetzbaren Bauteil (3) eingelassen sein. Es kann Ausgestaltungen für den Wasserablauf aufweisen. Sowohl das Innenrohr (8) als auch das Bauteil (3) sollen aus wärmedämmendem, nicht brenn- und nicht glimmbaren Material bestehen.

## Beschreibung

Die Erfindung betrifft eine Vorrichtung zum Begrünen einer Wand mit einer auf deren anderen Seite wurzelnden Pflanze, bestehend aus einem die Wand durchsetzenden Rohr mit einer Füllung aus elastischem Material, die den dieses Rohr durchwachsenden Trieb der Pflanze umgibt.

Außenseiten von Gebäuden, Mauern oder Lärmschutzvorrichtungen können durch Verpflanzen von Klettergewächsen an ihrem Fuß im Erdboden und durch Anbringen von Kletterhilfen wie Spalieren begrünt werden. Es ergeben sich jedoch dabei natürliche Höhenbegrenzungen. Vor allem muß eine ausreichend große offene Erdbodenfläche zur Verfügung stehen, in der die Pflanzen ausreichend tief wurzeln und Feuchtigkeit finden können, um die gewünschte wirksame Flächendeckung zu erzielen. Dies ist nicht möglich in städtischen Straßen mit bis an den Wandfuß der Häuser reichendem Verschluß des Bodens durch Straßen- oder Gehwegabdeckungen. Auch können die Nutzungen der Erdgeschosse, zum Beispiel durch Läden, eine solche Bodenbepflanzung verbieten.

Bekannt sind aus DE G 85 30 474 Wandteile zum Abstützen von Lärmschutzwällen auf der Straßenseite mit nach oben weisenden Durchwachsöffnungen für in dem Wall wurzelde Pflanzen. Auch ist bekannt, Trockenmauerwerk aus aufgeschichteten oder untereinander vermörtelten Röhren, zum Beispiel Betonrohren kleineren Querschnitts, Drainagerohren oder Hohlziegelsteinen aufzubauen, die dann mit Erde verfüllt und bepflanzt werden. Solche Wände müssen jedoch eine ausreichende Schräglage aufweisen, um genügend Niederschlagswasser in den Bepflanzungsräumen auffangen und sammeln zu können. Auch sind nur verhältnismäßig geringe Bauhöhen möglich und eine Verwendung für senkrechte städtische Hausfassaden ist ausgeschlossen.

In De OS 37 24 854 wird eine beiderseits freistehende Lärmschutzwand beschrieben, auf deren einer, von der Straße abgewandten Seite, eine Pflanze wurzelt, die aufwärts weisende, sie durchsetzende S-förmige Rohre zur Aufnahme von Trieben dieser Pflanze zur Begrünung der Straßenseite der Wand aufweist, wobei diese Rohre mit schallisolierendem Material ausgepolstert sind. Die durch das Durchlaufen von Niederschlagswasser durch diese Rohre entstehenden Probleme sind bei einer solchen freistehenden Wand nicht gegeben. Auch sind die auf die durch das Rohr geführten Triebe einwirkenden Scherkräfte der Eigenlast und der Windbeanspruchung nicht berücksichtigt.

Diesen Vorschlägen gegenüber besteht das Bedürfnis, gerade, hohe, ausgedehnte Stadtfassaden in eintöniger Bauweise mit Grün zu beleben und zu verdecken und insbesondere architektonisch unnatürlichen und bedrückend wirkenden großen Bauflächen ein belebtes Aussehen durch individuellen abwechslungsreichen Bewuchs zu geben. Vom Boden aus ist die nur in beschränktem Umfang und in vielen Fällen mit den bekannten Lösungen überhaupt nicht möglich.

Aufgabe der Erfindung ist es, eine solche Begrünung der Außenflächen von Häusern, insbesondere auch in beliebiger Stockwerkshöhe, bei Fehlen eines bepflanzbaren Vorgrundes zu ermöglichen, und zwar nicht nur für die Bedeckung der Fassade mit Kletterpflanzen, sondern auch mit Strauch- und Baumgewächsen, wobei das Durchdringen von Niederschlagswasser in die Innenräume durch die Durchwachsöffnungen unter allen Umständen vermieden werden muß.

Diese Aufgabe wird mit den in den Ansprüchen angegebenen Rohren bzw. Bauteilen gelöst, die in senkrechten Wänden in beliebiger Stockwerkslage oder Bauhöhe beim Neubau oder auch bei Altbauten eingesetzt werden können. Derartige Anlagen sind dann nicht auf Befeuchtung durch Niederschäge angewiesen. Diese kann vielmehr in jeweils dosierter Weise unter Zugabe individueller Düngerstoffe von Hand oder automatisch erfolgen. Die erfindungsgemäße Berünung eignet sich daher auch für heiße und trockene Lagen.

Das den Trieb oder den Stamm der Pflanze aufnehmende, die Wand durchsetzende Rohr kann in eine Bohrung in der Wand eingesetzt oder in eine Durchbrechung eingemörtelt werden. Das das Rohr aufnehmende Bauteil kann bei Errichtung der Wand mit eingemauert oder in einen Durchbruch in einer bereits bestehenden Wand eingeschoben werden.

Es ist jedoch zu beachten, daß sowohl durch das Material des Innenrohres oder durch durchgehende Lücken zwischen dem Pflanzentrieb und dem Innenrohr, als auch durch das die Wand durchdringende, Rohr und Pflanzentrieb aufnehmende Bauteil nicht Wärmebrücken gegenüber einer besser wärmedämmenden Wand entstehen. Gemäß der Erfindung sind daher für Innenrohr bzw. Bauteil Materialien zu verwenden, die immer einen gleichen oder besser einen höheren Wärmedämmwert haben als die von ihnen durchsetzte Wand, wie z.B. Polyurethanschaum für das Innenrohr in weicher Form und für das Bauteil als Hartschaum oder für letzteres Schaumbeton. Desweiteren ist es notwendig, daß weder das Innenrohr noch das Bauteil aus brennbaren oder glimmfähigen Stoffen besteht, um im Brandfall ein Durchbrennen der von ihnen durchsetzten Mauer zu vermeiden.

Bei Verwendung der erfindungsgemäßen Bauteile kann auf kostspielige Fassadengestaltung, sogar auf ein Verputzen und Bemalen der Wände verzichtet werden, da sie vollständig mit einer lebendigen, bei entsprechender Bepflanzung und Sonnenlage über die ganze Fläche blühenden Kletterpflanzen, zum Beispiel Clematis oder Waldrebe, Kletterrosen oder Sträuchern oder geeigneten Baumsorten bedeckt werden können. Bei vielen Pflanzensorten, zum Beispiel wildem Wein und Waldreben, kann auf Kletterhilfen wie zum Beispiel Spaliere oder Drahtbespannungen verzichtet werden. Es kann sich dadurch ein parkartiges Strassenbild anstelle einer tristen Großstadtstraße ergeben, sozusagen senkrechte blühende Gärten. Auch kann auf Aushängen von Blumenkästen verzichtet werden. Es ergibt sich dadurch zudem für die Wände ein Feuchtigkeitsschutz und eine wirksame Temperaturisolierung gegen Kälte und Sonneneinstrahlung. Vor allem aber werden sich damit Großstadträume mit Singvögeln beleben, die in dem Bewuchs ideale Nisträume, Nahrung und Schutz finden können.

Ausführungsbeispiele der Erfindung werden im folgenden anhand der Zeichnungen näher beschrieben. Es zeigen
- Fig. 1: eine schematische Schnittdarstellung eines eingebauten erfindungsgemäßen Bauteils in eine Häuserwand in einem höheren Stockwerk;
- Fig. 2 bis 6: weitere Ausführungsformen, ebenfalls in senkrechter Schnittdarstellung.

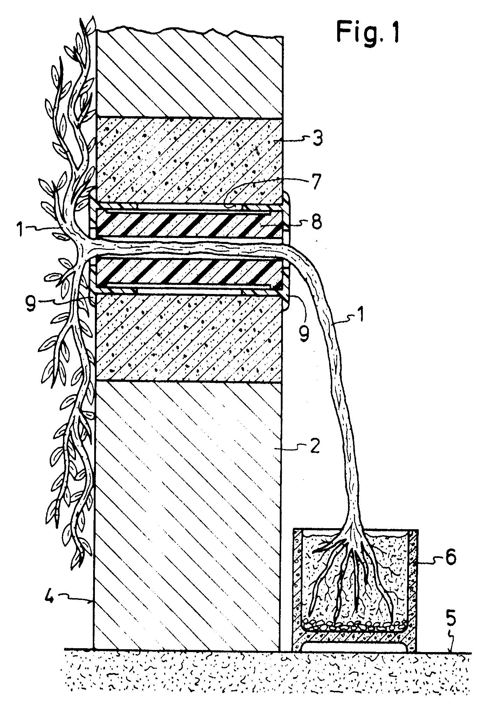

In Fig. 1 ist in die mit der Kletterpflanze 1 begrünten Wand 2 das erfindungsgemäße Bauteil 3 eingesetzt, durch das die Kletterpflanze 1 durch eine Durchbrechung in diesem Bauteil von der Innenseite der Wand zu deren Außenseite 4 durchgeführt ist. Mit 5 ist der Etagenboden des in einem höheren Stockwerk befindlichen Innenraumes bezeichnet, auf dem der Trog 6 nahe der Wand 2 steht, in der die Kletterpflanze 1 wurzelt. Das Bauteil 3 besteht aus Schaumbeton oder einem porösem, aber wetterdichten, in gewissem Umfang elastisch verformbaren Kunstoff, zum Beispiel Hartpolyurethanschaum. Die Durchbrechung des Bauteiles 3 ist durchsetzt von einem Rohr 7, in dem wiederum konzentrisch ein Rohr 8 aus elastisch verformbarem, geschlossenporigem Kunstoffstoffschaum, zum Beispiel aus Weichpolyurethanschaum, angeordnet ist, das den durch die Wand 2 wachsenden Trieb der Kletterpflanze 1 aufnimmt. Das Rohr 7 schließt beiderseits mit Abschlußmuffen 9 bündig ab, die mit der Innenseite der Durchbrechung des Bauteiles 3 und mit einem äußeren Rand an dessen Außenseite anliegen und nach innen über die Stirnseiten des Rohres 8 soweit reichen, daß es in seiner Lage festgehalten wird. Der Trieb 1 liegt in dem Rohr 8 lose, jedoch so, daß eine ausreichende Abdichtung gegen Eindringen von Niederschlagswasser gegeben ist. Das Rohr 7 kann dem Dickenwachstum des Trieebes der Kletterpflanze 1 im Lauf der Jahre ebenso wie der verformbare Kunststoff nachgeben. Bei Pflanzen oder Büschen, die mit den Jahren armdicke Triebe entwickeln, muß von Anfang an eine entsprechende lichte Weite des Rohres 7 und der Abschlußmuffen 9 vorgesehen werden.

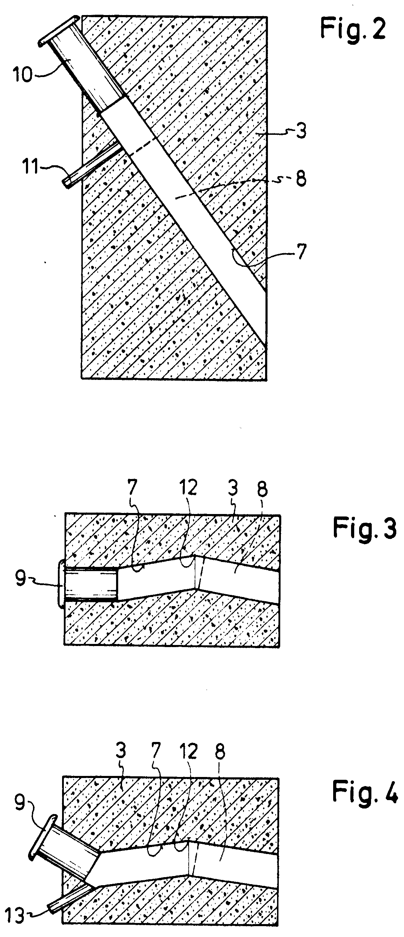

Statt der Kletterpflanzen 1 können Büsche oder Bäume Verwendung finden, die sich vor der Wand entfalten, und diesem Fall ist es zweckmäßig, ein erfindungsgemäßes Bauteil gemäß Fig. 2 zu verwenden, bei dem die schräge Aufwärtsrichtung des Rohres 7 dem mehr starren Aufwärtswachsen solcher Pflanzen entspricht. Es ist hier nur eine Abschlußmuffe 10 gezeigt, die das Eindringen von Niederschlagswasser verhindern soll. Das Rohr 7 aus Weichpolyurethanschaum sollte hierbei von unten her nur bis zu einem Wasserabflußrohr 11 reichen, um den Abfluß dennoch eingedrungenen Niederschlagswassers nicht zu behindern.

Fig. 3 zeigt eine Ausführungsform, bei der das Rohr 7 mittig nach oben geknickt ist, um ein Eindringen von Niederschlagswasser in den Innenraum sicher zu verhindern und den Abfluß nach außen zu ermöglichen.

Das Rohr 8 soll hier auch nur von innen bis zu dem Knick 12 reichen.

Fig. 4 zeigt eine ähnliche Ausführungsform, wobei jedoch der Ausgang des Rohres 7 nach oben gerichtet und darunter ein Abflußrohr 13 vorgesehen ist. Auch dieses Rohr weist einen Knick 14 nach oben zu auf. Dementsprechend sollte das Innenrohr 8 nur von innen her bis zu diesem Knick 14 reichen.

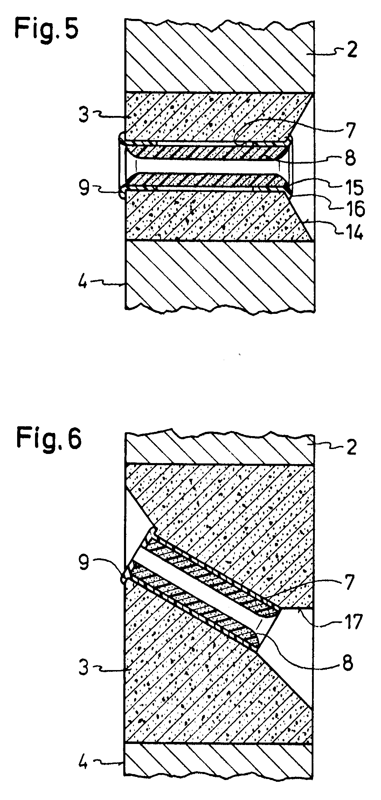

In Fig.5 weist das Bauteil 10 auf der Innenseite der Wand 1 eine trichterförmige Ausnehmung 14 auf, die in das mit einer Abschlußmuffe 15 versehene Rohr 8 mündet. Die Abschlußmuffe 15 weist ihrerseits trichterförmige Ränder 16 auf, deren Winkel dem Kegelwinkel der Ausnehmung 14 entspricht. Durch Weglassen des inneren Randes der Abschlußmuffe 9 und der Abrundung der Innenkante der Austrittsöffnung der Abschlußmuffe 9 und des Innenrohres 7 werden Scherbeanspruchungen vermieden, die auf den Trieb der Pflanze 1 durch deren Eigengewicht oder Windbelastung auftreten können. Diese Anordnung ist bei allen Ausführungsformen zweckmässig, wenn nicht an der Wand haftende Kletterpflanzen, sondern Strauch- oder Baumgewächse mit freistehenden Ästen Verwendung finden sollen.

Im übrigen ist die Ausgestaltung des Rohres 7 und die des inneren Rohres 8 dieselbe wie bei der Ausführungsform zu Fig.1. In Fig.6 ist das Rohr 7 schräg nach oben und außen geneigt, es weist an seinem unteren Ende keine Abschlußmuffe auf, ist aber dort trichterförmig ausgeweitet und mündet in eine ebenfalls trichterförmige Ausnehmung 16 im Bauteil 3, dessen Achse in der der Rohre 7 und 8 liegt. Durch diese Ausführungsformen wird einerseits das Einfädeln des Triebes der Pflanze durch das Rohr 8 erleichtert, andererseits kann der Bogen, in dem der Trieb bzw. der Stamm in das Rohr eingeführt ist, erheblich flacher werden. Je nach der verwendeten Pflanzenart können die Rohre 7 und 8 bei den Ausführungsformen zu Fig.5 und 6 kürzer oder länger gehalten werden, d.h., je starrer der Stamm der Pflanze im späteren Wachstum wird, desto weniger benötigt er Halt in der Wanddurchführung und desto kürzer können die Rohre 7 bzw. 8 sein.

Die Anordnung der trichterförmigen Ausnehmungen 14 bzw. 17 können ebenso vorteilhaft bei den anderen Ausführungsformen zu Fig.2 bis 4 Anwendung finden. Das Bauteil 3 kann aus einem beliebigen Material hergestellt werden, in das das Rohr 7 eingegossen bzw. eingeschäumt werden kann. Für das Einsetzen des Bauteils 3 einen Ausbruch in bereits bestehende Wände ist es zweckmäßig, ihn aus einem in gewissen Umfang flexiblen bzw. zusammenpressbaren Material herzustellen. Das Rohr 7 kann in bereits bestehende Wände in Bohrungen entsprechenden Durchmessers, wenn nötig mit Dämmaterial, eingesetzt werden.

Für das Rohr 7 kann ein nicht-korrodierendes Metall oder ein Metall mit Korrosion verhinderndem Überzug verwendet werden. Ebenso kann für das Rohr 8 ein anderes zusammenpressbares Material Verwendung finden, das dem Dickenwachstum des Triebes nachgeben und unter Umständen z.B. durch Längsteilung ohne Schwierigkeit entfernt und durch anderes Dichtmaterial ersetzt werden kann, wenn der Trieb dicker geworden ist. Auch kann es zweckmäßig sein, die Abschlußmuffen aus einem weichen Kunststoffmaterial herzustellen, um Scherwirkungen ihrer Innenränder an dem an Dicke zunehmenden Trieb zu vermeiden.

Bei Pflanzen 1, die im Laufe der Zeit dickere Stämme bilden als der Querschnitt des Rohres 7 aufnehmen kann, ist es zweckmäßig, das Rohr 7 und das Innenrohr 8 längs zu teilen, so daß sie beispielsweise aus zwei Halbrohren bestehen. Diese Rohrteile können bei entsprechendem Wachstum der Pflanze herausgezogen und nach Erweitern des Durchbruchs durch die Wand 2 oder das Bauteil 3 durch solche größere Weite ersetzt werden.

| Bezugszeichenverzeichnis | | |
|---|---|---|
| | 1 | Kletterpflanze |
| | 2 | Wand |
| | 3 | Bauteil |
| | 4 | Außenseite zu 2 |
| | 5 | Etagenboden |
| | 6 | Trog |
| | 7 | Rohr |
| | 8 | Innenrohr |
| | 9 | Abschlußmuffen |
| Fig.2 bis 4 | 10 | Abschlußmuffe |
| | 11 | Abschlußmuffe |
| | 12 | Knick von 8 |
| | 13 | Wasserabflußrohr |
| Fig.5 und 6 | 14 | trichterförmige Ausnehmung in 3 |
| | 15 | Abschlußmuffe |
| | 16 | trichterförmige Ränder von 15 |
| | 17 | trichterförmige Ausnehmung in 3 |

## Patentansprüche

1. Vorrichtung zum Begrünen einer Wand (2), mit einer auf deren anderen Seite wurzelnden Pflanze (1), bestehend aus einem die Wand (2) durchsetzenden Rohr (7) mit einer Füllung (8) aus elastischem Material, die den dieses Rohr (7) durchwachsenden Trieb der Pflanze (1) umgibt,
dadurch gekennzeichnet, daß die Pflanze (1) auf der Innenseite der Wand (2) eines Gebäudes in einem Trog (4) wurzelt und daß ein äußeres, die Wand (2) durchsetzendes Rohr (7) zur Aufnahme eines Triebes der Pflanze (1) ein Innenrohr (8) aus dem Dickenwachstum des Triebes der Pflanze (1) elastisch nachgebenden und gegen Niederschlagswasser abdichtenden Kunststoff aufweist.

2. Vorrichtung nach Anspruch 1,
dadurch gekennzeichnet, daß sie aus einem in die Wand (2) einsetzbaren Bauteil (3) besteht, das von dem Rohr (7) durchsetzt ist.

3. Vorrichtung nach Anspruch 1, 2,
dadurch gekennzeichnet, daß das äußere Rohr (7) von Abschlußmuffen (9) an der Außenseite (4) und an der Innenseite der Wand (2) abschließbar ist, die mit einem äußeren Rand an der Wand (2) anliegen und mit einem innenren Rand das Innenrohr (8) in seiner Lage festhalten.

4. Vorrichtung nach Anspruch 1, 2, 3,
dadurch gekennzeichnet, daß die Abschlußmuffe (9) an der Außenseite der Wand (1) aus weichem Kunststoff besteht und die Kante ihrer Austrittsöffnung ebenso wie die Austrittsöffnung des Innenrohres (8) abgerundet ist.

5. Vorrichtung nach Anspruch 1, 2, 3, 4,
dadurch gekennzeichnet, daß das äußere Rohr (7) und die Abschlußmuffen (9) aus nicht korrodierendem Material bestehen.

6. Vorrichtung nach Anspruch 1, 2, 3, 4, 5,
dadurch gekennzeichnet, daß das äußere Rohr (7) einen nach oben weisenden Knick (12) bildet.

7. Vorrichtung nach Anspruch 1, 2, 3, 4, 5, 6,
dadurch gekennzeichnet, daß das äußere Rohr (7) einen weiteren nach unten weisenden Knick in seinem nach der Außenseite (4) der Wand (2) weisenden Teil bildet.

8. Vorrichtung nach Anspruch 1, 2, 3, 4, 5, 6, 7,
dadurch gekennzeichnet, daß das äußere Rohr (7) ein nach der Außenseite (4) der Wand (2) gerichtetes Wasserabflußrohr (11, 13) aufweist und daß das Innenrohr (8) von der Innenseite der Wand (2) her nur bis zu diesem Wasserabflußrohr (11, 13) weist.

9. Vorrichtung nach Anspruch 1, 2, 3, 4, 5, 6, 7, 8,
dadurch gekennzeichnet, daß das äußere Rohr (8) die Wand (2) bzw. das Bauteil (3) schräg nach oben und nach der Außenseite (4) der Wand (2) durchsetzt.

10. Vorrichtung nach Anspruch 1, 2, 3, 4, 5, 6, 7, 8, 9,
dadurch gekennzeichnet, daß das Innerohr (8) aus verschäumtem Polyurethan besteht.

11. Vorrichtung nach Anspruch 2,
dadurch gekennzeichnet, daß das Bauteil (3) aus Schaumbeton oder verschäumtem Kunststoff besteht.

12. Vorrichtung nach Anspruch 2,
dadurch gekennzeichnet, daß das Bauteil (3) auf der nach der Innenseite der Wand (2) gerichteten Seite eine den Eingang des Innenrohres (8) umgebende trichterförmige Ausnehmung (14, 17) aufweist.

13. Vorrichtung nach Anspruch 1, 2,
dadurch gekennzeichnet, daß das Innenrohr (8) und das Bauteil (3) aus nicht-brennbarem und nicht-glimmfähigem Material besteht.

14. Vorrichtung nach Anspruch 1, 2,
dadurch gekennzeichnet, daß das Innenrohr (8) und das Bauteil (3) aus einem Material besteht, das die gleiche oder größere Dämmwirkung aufweist als die von ihnen durchsetzte Wand (2).
